# EUROPÄISCHE PATENTSCHRIFT

(11) **EP 0 779 246 B1**
(45) Veröffentlichungstag und Bekanntmachung des Hinweises auf die Patenterteilung: **17.03.1999**
(21) Anmeldenummer: 96203292.6
(22) Anmeldetag: 22.11.1996
(51) Int. Cl.: C02F 1/52, C02F 1/54

(54) **Fällungshilfsmittel zur Behandlung von Abwässern**
Precipitating agent for treating effluents
Agent de précipitation pour le traitement d'effluents

(30) Priorität: 11.12.1995 IT BZ950076
(43) Veröffentlichungstag der Anmeldung: 18.06.1997
(73) Patentinhaber: Torggler Chimica SpA, 39012 Merano (IT)
(72) Erfinder: Patauner, Luca, 38040 Martignano (Trento) (IT)
(74) Vertreter: Faraggiana, Vittorio, Dr. Ing.

(56) Entgegenhaltungen:
- EP-A- 0 513 352
- GB-A- 610 988
- GB-A- 805 526

## Beschreibung

Die Erfindung bezieht sich auf ein Fällungshilfsmittel zur Behandlung von Abwässern, gemäß dem einleitenden Teil des Anspruchs 1, eine Zusammensetzung desselben gemäß dem einleitenden Teil des Anspruchs 2, ein Verfahren zu dessen Herstellung nach dem einleitenden Teil der Ansprüche 3, 4 und 5.

Die Natriumalluminate (Na₂Al₂O₄) sind seit Jahren bekannt und werden vor allem in den Vereinigten Staaten als Flockungsmittel für Abwässer gemischter Art (Haushaltsund Industriewässer) mit hervorragenden Ergebnissen verwendet.

Das allgemein anerkannte Aktionsmodell der handelsüblichen Flockungsmittel besteht darin, daß nach Zuschlag des Reagenses zu den Abwässern und der Korrektur des pHWertes, die Bildung von kolloidalen Metallhydroxyden (Al oder Fe) vorliegt; diesem Schritt folgt nach einer je nach Flockungsmittel verschiedenen Zeit ein zweiter (ortho-kinetischer) Schritt, bei dem die Agglomeration des Kolloids zu festen Mikroteilchen erfolgt, innerhalb welchen bei der Fällung auch Fremdteilchen und teilweise die Hydroxyde der Schwermetalle mitgeschleppt werden.

Der Mechanismus ist daher jener einer gemischten Ko-präzipation mit Absorbtion, d.h. ein vor allem physikalischer Mechanismus.

Es ist hervorzuheben, daß dieser Mechanismus jedenfalls sehr auf verschiedene physikalische Parameter, auf die Zusammensetzung der Lösung, auf die ionische Kraft usw. anspricht.

Die herkömmlichen, weltweit bestätigten und verbreiteten Flockungsmittel haben sich beim Niederschlag von Abwässern nicht vollständig wirksam erwiesen, die z.B. Bor, Kupfer, Blei und auch Nitrate enthalten.

Die Aufgabe der vorliegenden Erfindung liegt daher darin, die Zubereitung eines Mittels vorzuschlagen, das als Hilfsstoff zur Fällung verwendet werden kann, um eine Behandlung von Abwässern zu ermöglichen, die dazu ausgerichtet ist, mit der höchsten Wirksamkeit die Fällung insbesondere von Bor und von Hydraten der in den zu behandelnden Wässern enthaltenen Schwermetalle zu decken.

Diese Aufgabe wird erfindungsgemäß durch die Merkmale des ersten Patentanspruches gelöst. Das erfindungsgemäße Ko-präzipiermittel ist ein gegenüber den klassischen Flockungsmitteln im Prinzip neues Produkt. Dieses Produkt ist an und für sich kein Flockungsmittel, es kann jedoch richtigerweise besser als "Flockungshilfsmittel" bezeichent werden. Diese Definition ist in Zusammenhang mit dem Aktionsmechanismus des Produktes gegeben.

Die Aktion des neuen Kopräzipiermittels bzw. Fällungshilfsmittel beruht wahrscheinlich auf einem Mechanismus, der verschieden ist als der herkömmliche. Dieses Ko-präzipiermittel "anfänglich gedacht für das Borproblem" erscheint einen zweistufigen, chemischen Mechanismus auszunutzen. In der ersten Stufe wickelt sich die Bildung von lösbaren Komplexen unter verschiedenen Verbindungen wie jene mit Bor, Kupfer, Blei und dem Produkt ab. In zweiten Stufe werden die lösbaren Komplexe zusammen mit einem Hydrat (im allgemeinen Kalzium) mitgefällt und werden auf stabile Art an die Schlämme gebunden, die dann von der Lösung leicht getrennt werden. Der pH-Wert ist bei diesem Schritt von großer Wichtigkeit und spezifisch für die behandelten Abwässer.
Dieser angenommene Mechanismus kann von Versuchsdaten abgeleitet werden.

### Vergleichsbeispiele

Um die Unterschiede in den Wirkungen des Produktes besser hervorzuheben, ist es ausreichend, die Verhaltensunterschiede zwischen diesen und anderen, handelsüblichen Produkten in Betracht zu ziehen.

Als Beispiel (auch zumal es der Stoff ist, von dem man die meisten Daten besitzt) nehme man die Bor-Methodik.

Dazu wurden drei verschiedene, dieselbe Bormenge (30 ppm als B) enthaltende Lösungen zubereitet.
a) Lösung von Borsäure in distilliertem Wasser (mit Zuschlag von Kalzium und Magnesium um die Härte zu erhöhen)
b) Meerwasser mit einem auf 30 ppm erhöhten Borinhalt.
c) Eine dem Meerwasser entsprechende Salzlösung mit einem inhalt von Doppelsalzen (ca. 40 g/l von Chloryden und 20 g/l von Na, d.h. mit einer sehr hohen ionischen Kraft.

Es wurden Versuche an allen drei Lösungen sowohl mit dem erfindungsgemäßen Fällungshilfsmittel als auch mit anderen, handelsüblichen Produkten durchgeführt.

Bei Gleichheit der Arbeitsbedingungen (pH 9,5, Dosierung 0,5%, T = 50°C) wurden die folgenden Ergebnisse erhalten:

| PRODUKT | BOR-AUSFÄLLUNG Lösung A | BOR-AUSFÄLLUNG Lösung B | BOR-AUSFÄLLUNG Lösung C |
|---|---|---|---|
| Erfindung | 90% bzw. mehr | 90% bzw. mehr | 90% bzw. mehr |
| Eisenchlorid 40% und Kalk | zirka 40% | zirka 30% | 25-30% |
| Natriumaluminat oder Aluminiumsulfat und Kalk | 60-70% | 55-60% | 40-50% |
| hydraulischer Kalk Pulver | 50% | 40-50% | 40% |

Es ist vollkommen die Beständigkeit des neuen Produktes bei Änderung der Salzkonzentration der Lösung (ionische Kraft) ersichtlich.

Diese Versuche wurden dann auf die Schwermetalle ausgedehnt, wo ein optimales Verhalten vorliegt, insbesondere mit Blei, Kupfer und Kadmium.

Nun bleibt noch die Fällung der Nitrate seitens des Produktes zu überprüfen, die beobachtet, jedoch nicht eingehend untersucht wurde.

Gegeben durch die Verschiedenheit des Produktes gegenüber jenen die auf dem Markt erhältlich sind, liegt es nahe daran zu denken, diese zu verwenden, wo die anderen Produkte versagen.

Beim Bor, wie oben angegeben, bestehen beim heutigen Stand zwei verschiedene in der Tat wirksame Verfahren, um es zu fällen.

Das erste Verfahren ist jenes, das das amerikanische Patent US-A 4,755,298 verwendet, wo das Bor über geeignete organische Matrizen als Komplexverbindung gebunden und dann durch Ultrazentrifugieren beseitigt wird, da es einen Teil von physikalisch abtrennbaren Polymeren bildet, während der zweite Fall die Verwendung von Harzen mit starken anionischen Austausch betrachtet.

Was das erste Verfahren betrifft, liegt es nahe, daß dies bei großen Wasservolumen, wie etwa jene die von einer Kläranlage bewältigt werden müssen, nicht anwendbar ist (auch wegen der hohen Kosten der verwendeten Polymere). Es ist offensichtlich, welche technische Hürden (und Gefahren) die Konstruktion von Ultrazentrifugen bereiten würde, die für solche Volumen geeignet sind. Beim zweiten Verfahren ist sehr gut bekannt, daß die Harze optimal auf kleine Verschmutzungsmengen einwirken und daß daher eine Belastung oberhalb von 10 ppm an Wasservolumen in der Größenordnung von 10 m³/h 100 Gramm/h eines durch die Harze zurückgehaltenen Stoffes bedeuten würden. Diese Belastungen würden eine Regeneration der Harze innerhalb sehr kurzer Zeiten betragen, geradezu nach einigen Betriebsstunden, auch weil nicht nur der verunreinigende Stoff zurückgehalten wurde. Es ist dann zu berücksichtigen, daß das Bor, in der Form von Borsäure, einen Kₐ -Wert in der Größenordnung von 10⁻¹⁰ besitzt und die Harze deshalb auf angemessene Weise Auflösungen mit pH -Werten von 11-12 mit den klaren, daraus folgenden Problemen der Anlage wirken müssen.

Es wäre sodann interessant zu wissen, wo die Regenerationsabfälle der Harze entsorgt werden sollen. (Es ist hervorzuheben, daß das Regenerationsmittel jedenfalls eine starke und konzentrierte Base sein müßte, was nicht kleine Probleme bei der Handhabung und der Lagerung schaffen würde).

Das erfindungsgemäße Fällungshilfsmittel, im Gegensatz zu den als "ähnlich" definierbaren Produkten, ist eine Flüssigkeit, anstatt ein Feststoff, und kann daher leicht dosiert werden.

Es kann überdies rasch den bestehenden Anlagekonstruktionen ohne eine übermäßige Kostenbelastung (es wird nur ein Dosiergerät benötigt) angepaßt werden.

Was die Schlämme betrifft, auch wenn sie ein beträchtliches Schüttvolumen aufweisen, werden sie drastisch durch Nachbehandlungen (wie etwa Trocknung und Pressung) reduziert, wobei schließlich diese geringer sind als jene die mit anderen Flockungsmittel bei gleicher Dosierung erhalten werden.

In einem Vergleichsversuch mit Eisenchloryd bei gleicher Dosierung, bei denselben Reaktionsbedingungen und derselben behandelten Lösung (Spülwasser von Stahlwerköfen) wurde eine Fällung unter Vergleich von zwei Flockungsmitteln, was Eisen, Aluminium und Chrom betrifft, mit leicht besseren Ergebnissen seitens des neuen Fällungshilfsmittels erzielt, was jedoch die Fällung bei den Schlämmen betrifft, wurde nach Trocknung bei 105° C für 48 Stunden ein Ergebnis an Schlammgewicht bei der Behandlung mit dem neuen Produkt erhalten, das leicht unterhalb der Hälfte jener Schlammgewichte liegt, die mit derselben Behandlung über Eisenchloryd erhalten wurden.

Die Vorteile und die Nachteile des Produktes sind jedenfalls an besonderen Wasserarten zu proben, bei denen der Unterschied zwischen diesen und anderen Produkten der Konkurrenz in einigen Fällen sehr erheblich sein kann.

Es ist interessant hervorzuheben, daß beim Ausfluß das Abwasser eine besondere Klarheit aufweist; die gemessene Trübung bei anderen Flockungsmitteln beläuft sich nämlich bei 5 NTU, während jene des neuen Fällungshilfsmittels ohne große Probleme auch bis zu 2 NTU erreicht.

Angesichts des heutigen Wissens, erscheint das neue Produkt und Produkte dieser Art, auch wenn Kloakenwässer nicht ausgeschlossen werden, insbesondere bei der Behandlung von sehr schmutzigen Abwässern und insbesondere von jenen wirksam zu sein, die anorganische Verschmutzungsstoffe enthalten, die mineralogisch mit Aluminium und Silizium in Wechselbeziehung treten. Das Kalzium und das Magnesium übernehmen jedenfalls eine entscheidende Rolle in der Wirkungsweise des Systems.

### Beispiel eines Versuches

### Gegenstand des Versuches:

Versuche mit Tests an einer wirklichen Probe zur Erfassung der Wirksamkeit des Produktes und Vergleich mit einem handelsüblichen Flockungsmittel.

### Zubereitung der Probe:

Die Probe (geliefert von einem Stahlwerk) ist zubereitet worden, indem sowohl von der Spülung der Rauchgase des Primärofens (saures Wasser) stammende Abwässer, als auch von der Spülung der Rauchgase des Sekundärofens (höchst basische Abwässer) stammende Abwässer verwendet wurden. Das basische Abwasser weist einen pH-Wert von 11,85 pH auf, während jenes saure einen pH-Wert von 5,25 pH aufweist. Die zu behandelnde Probe enthält überdies eine sehr große Menge an schwebenden Stoffen (in der Form von einer Mikrosospension von feinsten Pulverteilchen) und wurde zubereitet, indem vier Teile sauren Wassers und ein Teil alkalischen Wassers verwendet wurden. Der pH-Wert der erhaltenen Lösung belief sich ungefähr bei der Neutralität und wurde dann mit Schwefelsäure gebracht auf 1,65 pH , um die realen Arbeitsbedingungen zu simulieren.

### Behandlung der Probe:

Zugemischt wurden 20 ppm von Fe²⁺ zur Lösung, um das als hexavalentes vorliegende Chrom zu Cr³⁺ zu reduzieren, um es fällen zu können.

500 cm³ von Abwasser wurden behandelt mit: 0,5 cm³ des neuen Hilfsfällungsmittels (Lösung A) und 0,5 cm³ von Eisenchloryd 40% (Lösung B). Beide Lösungen wurden mit hydraulischem Kalk auf einen pH-Wert von 8,50 gebracht, wobei 2 cm³ eines anionischen Polyelektrolyten 2540 nach 15 Minuten Rührung zugeführt wurden.

Beide Lösungen wurden für einige Stunden zum Sedimentieren belassen.

### Ergebnisse:

Die mit dem neuen Fällungshilfsmittel behandelte Lösung weist ein Volumen von Schlämmen auf, das jener Lösung gleichkommt, die mit derselben Menge von Eisenchloryd behandelt wurde und erscheint völlig klar, im Gegensatz zu jener Lösung, die mit Eisenchloryd behandelt wurde, die eine auf Suspensionen brown'schen Charakters zurückzuführenden Mikrotrübung aufweist. Was den pH-Wert betrifft, wies nach 24 Stunden Sedimentation die mit den erfindungsgemäßen Fällungshilfsmittel behandelte Lösung denselben pH-Wert am Ende des Verfahrens, d.h. 8,51 auf, während jene mit Eisenchloryd behandelte auf pH 8,11 sank. Im analythischen Teil wurden die folgenden Metalle dosiert:
Eisen, Chrom, Aluminium
wobei die unten angeführten Ergebnisse erhalten wurden.

| Lösungen | Fe (mg/l) | Cr (mg/l) | Al (mg/l) |
|---|---|---|---|
| Zu behandelnde Lösung | 95.20 | 8.02 | 0.30 |
| Lösung A behandelt | 0.00 | 0.01 | 0.00 |
| Lösung B behandelt | 0.02 | 0.02 | 0.00 |

### Schlußfolgerungen:

Abschließend kann behauptet werden, daß an dieser Art von behandeltem Abwasser das aluminsilikatische Fällungshilfsmittel sich sehr gut verhält, was die Klärung des Abwassers betrifft, überdies verhält es sich gleich gut was die Fällung der überprüften Metallen betrifft und ist vollkommen vergleichbar mit dem handelsüblichen Eisenchloryd, was die chemische Ausbeute betrifft.

Die aluminium-silikatische Schlämme, auch wenn sie dasselbe Volumen aufweisen, wie jene des Eisenchloryds, erscheinen sie als Volumen flockartiger und daher leichter dehydrisierbar. (Nach Trockung weisen nämlich die aluminium-silikatischen Schlämme ein Gewicht gleich der Hälfte jener, die Eisen enthalten, auf).

## Patentansprüche

1. Fällungshilfsmittel für die Behandlung von Abwässern, gekennzeichnet durch folgende Reagenzien:
Technisches Natriumsilikat Be 38-40
flüssiges Natrium-Aluminat Al₂0₃ (18%) Na₂ (19%)
technisches Natronlauge Lösung 50%
technisches Kaliumhydroxyd Lösung 50%

2. Zusammensetzung von Reagenzien nach Anspruch 1, dadurch gekennzeichnet, daß sie folgende Dosierungen umfaßt:
| Reagens | Dosierung % |
|---|---|
| Natriumsilikat | 68,81 |
| Natriumaluminat | 6,88 |
| Natrium | 18,35 |
| Kaliumhydryd | 5,96 |
| INSGESAMT | 100,00 |

3. Verfahren zur Zubereitung einer Zusammensetzung gemäß Anspruch 2, dadurch gekennzeichnet, daß eine erste Lösung erhalten wird, in der sich das Natrium und das Natriumsilikat verbinden und in Rührung versetzt werden, bis eine homogene Lösung erhalten wird, und eine zweite Lösung zubereitet wird, bei der sich das Natriumaluminat und das Kaliumhydryd verbinden und in Rührung versetzt werden, bis eine homogene Lösung erhalten wird.

4. Verfahren nach Anspruch 3 zur Erhaltung eines Fällungshilfsmittels gemäß Anspruch 1, dadurch gekennzeichnet, daß die erste Lösung in einen geeigneten Becher gegeben wird und unter Rührung langsam die zweite Lösung zugemischt wird, wobei das Produkt nach ungefähr 3 Minuten heftiger Verdampfung (klarer und transparenter Aspekt) bereitgestellt ist.

5. Verfahren zur Zubereitung eines Produktes nach Anspruch 1 und 4, dadurch gekennzeichnet, daß in einen geeigneten Becher die erste Lösung gegeben wird, sie bis zur Verdampfung erhitzt wird und von da allmählich die zweite Lösung zugegeben wird, wobei versucht wird, die Bildung von großen Silikatanhäufungen zu vermeiden und gleichzeitig die Lösung siedend erhalten bleibt; wobei am Ende der Zumischung der zweiten Lösung, nach Erhaltung der Transparenz, das Produkt nach ungefähr drei Minuten kontinuierlicher Sieden bereitgestellt ist.

6. Verwendung eines Produktes nach Anspruch 1 zur Fällung von Bor aus Abwässern.

7. Verwendung eines Produktes nach Anspruch 1 zur Fällung von Schwermetallen.

8. Verwendung eines Produktes nach Anspruch 1 zur Fällung von Nitraten und/oder Nitriten in Abwässern.

## Claims

1. Precipitating agent for treating effluents, characterized by the following reactants:
technical sodium silicate Bè 38-40
liquid sodium aluminate Al₂O₃ (18%) Na₂O (19%)
technical caustic soda 50% solution
technical caustic potash 50% solution.

2. Reactant composition as claimed in claim 1, characterized in that it has the following proportion of ingredients:
| .Reactant | Proportion of ingredients % |
|---|---|
| sodium silicate | 68.81 |
| sodium aluminate | 6.88 |
| caustic soda | 18.35 |
| caustic potash | 5.96 |
| TOTAL AMOUNT | 100.00 |

3. A method of preparing a composition as claimed in claim 2, characterized in that a first solution is obtained in which caustic soda and sodium silicate are mixed together under stirring until a homogeneous solution is obtained, and a second solution is prepared in which sodium aluminate and caustic potash are mixed together under stirring until a homogeneous solution is obtained.

4. A method as claimed in claim 3 for obtaining a precipitating agent according to claim 1, characterized in that the first solution is put into an appropriate beaker and, under strong stirring, the second solution is slowly added, the product being ready after about 3 minutes of vigorous boiling (clear and transparent appearance).

5. A method of preparing a product as claimed in claims 1 and 4, characterized in that the first solution is put into an appropriate beaker, is heated until boiling and at this point the second solution starts being added very slowly, trying to avoid formation of big silicate agglomerates while, at the same time, trying to keep the solution boiling; at the end of the second solution addition, when transparency has been reached, the product is ready after about 3 minutes of uninterrupted boiling.

6. Use of a product as claimed in claim 1, for boron precipitation from effluents.

7. Use of a product as claimed in claim 1, for precipitation of heavy metals.

8. Use of a product as claimed in claim 1, for precipitation of nitrates and/or nitrites in effluents.

## Revendications

1. Agent de précipitation pour le traitement d'effluents, caractérisé par les réactifs suivants:
silicate de sodium technique Bè 38-40%
aluminate de sodium liquide Al₂O₃ (18%) Na₂O (19%)
soude caustique technique solution à 50%
potasse caustique technique solution à 50%

2. Composition de réactifs selon la revendication 1, caractérisée en ce qu'elle présente les dosages suivants:
| .Réactif | Dosage % |
|---|---|
| silicate de sodium | 68,81 |
| aluminate de sodium | 6,88 |
| soude caustique | 18,35 |
| potasse caustique | 5,96 |
| MONTANT TOTALE | 100,00 |

3. Méthode pour la préparation d'une composition selon la revendication 2, caractérisée en ce que l'on obtient une première solution, dans laquelle on mélange la soude caustique et le silicate de sodium sous agitation jusqu'à obtenir une solution homogène, et l'on prépare une seconde solution dans laquelle on mélange l'aluminate de sodium et la potasse caustique sous agitation jusqu'à obtenir une solution homogène.

4. Méthode selon la revendication 3 pour obtenir un agent de précipitation selon la revendication 1, caractérisée en ce que l'on met dans un becher convenable la première solution, et sous forte agitation, on y ajoute lentement la seconde solution, le produit étant prêt après environ 3 minutes de vigoureuse ébullition (aspect limpide et transparent).

5. Méthode pour la préparation d'un produit selon les revendications 1 et 4, caractérisée en ce que l'on met dans un becher convenable la première solution, on chauffe jusqu'à ébullition et à ce point on commence à y ajouter très lentement la seconde solution en essayant d'éviter la formation de gros agglomérats de silicates et, en même temps, de maintenir la solution en ébullition; à la fin de l'addition de la seconde solution, après avoir atteint la transparence, le produit est prêt après environ 3 minutes d'ébullition sans interruption.

6. Emploi d'un produit selon la revendication 1 pour la précipitation de bore des effluents.

7. Emploi d'un produit selon la revendication 1 pour la précipitation des métaux lourds.

8. Emploi d'un produit selon la revendication 1, pour la précipitation de nitrates et/ou nitrites dans les effluents.
